# EUROPÄISCHE PATENTANMELDUNG

(11) **EP 1 568 982 A2**
(43) Veröffentlichungstag der Anmeldung: **31.08.2005**
(21) Anmeldenummer: 05405202.2
(22) Anmeldetag: 18.02.2005
(51) Int. Cl.: G01L 7/08

(54) **Membrane**

(30) Priorität: 25.02.2004 CH 307042004
(71) Anmelder: Fr. Sauter AG, 4016 Basel (CH)
(72) Erfinder: Hämmerle, Martin, 2744 Belpharon (CH)
(74) Vertreter: Bollhalder, Renato

(57) **Zusammenfassung**

Eine Membrane (1) umfasst einen elastischen druckdichten Federbereich, in dem ein festerer Teller (2) angeordnet ist. Der Federbereich besteht aus Elastomermaterial, in das mindestens ein metallischer Federarm (4) eingebettet ist. Ein solcher Federarm (4) bildet eine kompakte, integrierte Federkonstruktion in der Membrane (1) selbst.

## Beschreibung

Die Erfindung betrifft eine Membrane gemäss dem Oberbegriff des unabhängigen Patentanspruchs 1.

Solche Membranen werden beispielsweise als elastische Flachmembranen in der Druckmesstechnik zur Umwandlung von Druck in Kraft und/oder Hub verwendet. Der Druck wird gemessen, indem die Kraft und/oder der Hub der Membrane bestimmt wird, welche bzw. welcher durch eine zwischen den beiden Membranoberflächen vorhandene Druckdifferenz erzeugt wird.

Dazu werden beispielsweise Membranen aus Metall in Form von federharten, häufig sehr dünnen Blechen eingesetzt. Solche metallische Membranen weisen üblicherweise eine relativ hohe Festigkeit auf, wodurch sie verhältnismässig grosse Druckdifferenzen ertragen können. Für die Messung verhältnismässig kleiner Druckdifferenzen mit befriedigender Messgenauigkeit sind allerdings entsprechend grosse Membranflächen notwendig, was den Platzbedarf für eine Messeinrichtung wesentlich vergrössert. Auch können metallische Membranen zu einer temperaturbedingten Änderung ihrer Form neigen und so Unstetigkeiten im Übertragungsverhalten bewirken. Sie werden deshalb üblicherweise nur zur Druckmessung in eingeschränkten vorbekannten Temperaturbereichen verwendet. Schliesslich müssen metallische Membranen präzis in der Messeinrichtung eingespannt werden, um zu vermeiden, dass eine unbeabsichtigte mechanische Spannung auf die Membrane wirkt, die das Messverhalten beeinflusst.

Andere elastische Flachmembranen werden aus Elastomeren hergestellt, wobei je nach Einsatzgebiet Elastomere mit verschiedenen Eigenschaften (z.B. chemische und thermische Beständigkeit) verwendet werden. Zur Vereinfachung und Verbesserung der Druckmessung weisen sie häufig Teller auf, die typischerweise aus einem festeren Material hergestellt sind, beispielsweise aus Metall, so dass bei einer Auslenkung der Membrane vor allem die elastomere Zone der Membrane verformt wird. Elastomere Membranen sind üblicherweise sehr robust, kostengünstig herstellbar und im Verhältnis zu metallischen Membranen sehr weich und nachgiebig, wodurch sie sich für die Messung von verhältnismässig kleinen Druckdifferenzen eignen. Allerdings weisen solche Membranen häufig keine konstanten, definierten Federeigenschaften auf. Einerseits befindet sich der Hub nicht in einem definierten Bereich und andererseits ändert die Federrate von elastomerem Material mit zunehmender Ausdehnung und zunehmender Temperatur wesentlich.

Bei der Messung der Druckdifferenz in einer Druckmesseinrichtung wird eine solche Membrane beispielsweise auf seinen beiden Oberflächen mit unterschiedlichen Drücken beaufschlagt. Dadurch wirkt eine Kraft auf die Membran (Umwandlung von Druck in Kraft), die mit geeigneten Messmitteln gemessen werden kann und mit der die Druckdifferenz bestimmt werden kann. Als solche Messmittel werden beispielsweise Biegebalken eingesetzt, welche die Kraft direkt in ein auswertbares elektrisches Signal übertragen. Oder es können auch federnde bzw. federgelagerte Achsen als Messmittel eingesetzt werden. Dabei wird die Kraft zuerst in eine Strecke umgewandelt (Hub der Membrane), die von einer solchen Achse aufgenommen wird. Die Längenänderung der Achse bzw. die Verschiebung der Achse kann wiederum elektronisch gemessen werden. In all diesen Fällen führen die Messmittel zu aufwändigen, dreidimensionalen und Platz beanspruchenden Konstruktionen in der Druckmesseinrichtung.

Der vorliegenden Erfindung liegt daher die Aufgabe zu Grunde, eine Membrane vorzuschlagen, die für die Messung kleiner Druckdifferenzen geeignet ist, gute Federeigenschaften aufweist und in einer Messeinrichtung eine einfache platzsparende Konstruktion ermöglicht.

Diese Aufgabe wird erfindungsgemäss durch eine Membrane gelöst, wie sie im unabhängigen Patentanspruch 1 definiert ist. Vorteilhafte Ausführungsvarianten der erfindungsgemässen Membrane ergeben sich aus den abhängigen Patentansprüchen.

Das Wesen der Erfindung besteht im Folgenden: Eine Membrane umfasst einen elastischen druckdichten Federbereich, in dem ein festerer Teller angeordnet ist. Der Federbereich besteht aus Elastomermaterial, in das mindestens ein Federarm eingebettet ist.

Ein solcher Federarm bildet eine kompakte, integrierte Federkonstruktion in der Membrane selbst und sorgt für eine definiertere Federung. Eine auf die Membrane wirkende Druckdifferenz zwischen den beiden Membranoberflächen bewirkt eine Verformung des verhältnismässig weichen Federbereichs und einen Hub des Tellers. Mit dem Hub des Tellers geht eine Auslenkung des Federarms einher, der einerseits den Bereich des Hubs definiert und andererseits die Federrate der Membrane im Wesentlichen bestimmt. Die Federrate entspricht der Kraft, die für eine bestimmte Auslenkung aufgewendet werden muss [N/m]. Dementsprechend weisen "weiche" Federn kleine Federraten auf und "harte" Federn grosse.

Die Auslenkung des Federarms bzw. des Federtellers kann in einer Druckmesseinrichtung auf einfache Weise gemessen werden, beispielsweise induktiv oder optisch und insbesondere kapazitiv. Für eine kapazitive Messung bestehen der mindestens eine Federarm und der Teller vorzugsweise aus einem elektrisch leitenden Material. Die Membrane ist beispielsweise in der Druckmesseinrichtung neben einer Polplatte angeordnet und mit einer Spannung beaufschlagt. Eine Verformung der Membrane bewirkt eine Änderung der Kapazität, die auf bekannte Weise gemessen werden kann, beispielsweise über den durch die Kapazitätsänderung erzeugte Ladungsänderung. Somit ist der Hub der Membrane und die Auslenkung des Federarms bestimmt. Durch die Anordnung der Membrane zwischen zwei Polplatten entsteht ein Doppelkondensator, so dass die Bestimmung der Kapazität durch eine differentielle Messung wesentlich verbessert werden kann, da Messungenauigkeiten ausgeglichen werden können. Aus dieser über die Kapazitätsänderung bestimmten Auslenkung kann dann die Druckdifferenz ermittelt werden.

Dank der erfindungsgemässen Membrane kann die Druckmesseinrichtung einfach konstruiert werden. Ausserdem ermöglicht sie eine kompakte Konstruktion einer Messeinrichtung für die Messung verhältnismässig kleiner Druckdifferenzen, beispielsweise solcher von weniger als 100 Pa und insbesondere solcher in einem Bereich von 5 - 10 Pa.

Vorzugsweise ist angrenzend an den Federbereich ein festerer Rand angeordnet. Die Membrane kann mit dem Rand in einer Messeinrichtung gehalten werden, was den Einbau wesentlich vereinfacht und sicherstellt, dass die Oberflächenspannung des Federbereichs nicht beeinträchtigt wird.

Der mindestens eine Federarm verbindet mit Vorteil den Rand mit dem Teller. Dies hat bei Druckbeaufschlagung eine regelmässigere Federung zur Folge.

Vorzugsweise bestehen der mindestens eine Federarm, der Rand und der Teller aus einem elektrisch leitenden Material. So können elektrische Signale direkt vom Teller über den Federarm in den Rand übertragen werden. Dies erleichtert die Messung der Auslenkung des Federarms, insbesondere eine kapazitive Messung.

Der mindestens eine Federarm mündet bei einer vorteilhaften Ausführungsvariante etwa tangential in den Rand und den Teller. Auf diese Weise kann ein Federbereich mit einer guten Federwirkung realisiert werden.

Vorzugsweise verläuft der mindestens eine Federarm teilweise etwa parallel zum Rand. Ein solcher Federarm ist einfach herstellbar.

Der mindestens eine Federarm weist mit Vorteil in dem Teil, in welchem er etwa parallel zum Rand verläuft, vom Rand und vom Teller etwa den gleichen Abstand auf, was eine einfachere Konstruktion der Membrane ermöglicht, insbesondere ein einfacheres Einbringen des Elastomermaterials.

Der Federbereich weist vorzugsweise drei bis sieben Federarme auf. Mit drei bis sieben Federarmen kann, bei einer verhältnismässig einfachen Konstruktion, eine gute Federwirkung erreicht werden.

Bei einer vorteilhaften Ausführungsvariante ist das Elastomermaterial mindestens teilweise wellenförmig angeordnet. Mit so angeordnetem Elastomermaterial kann die Federrate des Elastomermaterials im Vergleich zur Federrate des Federarms gering gehalten werden. Die Messung insbesondere kleiner Druckdifferenzen wird dadurch verbessert. Vorzugsweise ist die Federrate des Elastomermaterials im Federbereich um einen Faktor zehn tiefer als die Federrate des Federarms.

Das Elastomermaterial ist bei einer vorteilhaften Ausführungsvariante vorgespannt. Mit vorgespanntem Elastomermaterial kann der Nullpunkt der Membrane, d.h. die Auslenkung der Membrane bei gleichem Druck oberhalb und unterhalb der Membrane, einfacher genau definiert werden.

Mit Vorteil weist der Teller zur besseren Verbindung mit dem Elastomermaterial Löcher auf, in die das Elastomermaterial eingreift. Mit einem solchen Teller kann eine sichere Verbindung von Teller und Elastomermaterial ohne Verwendung eines zusätzlichen Haftvermittlers gewährleistet werden.

Vorzugsweise ist der Rand mit mindestens einer Lasche versehen. Solche Laschen können einerseits als Hilfe beim Positionieren der Membrane in einer Druckmesseinrichtung dienen und andererseits können Mittel zur Weiterleitung elektrischer Signale daran angeschlossen werden.

Im Folgenden wird die erfindungsgemässe Membrane unter Bezugnahme auf die beigefügten Zeichnungen und anhand von Ausführungsbeispielen detaillierter beschrieben. Es zeigen:
- Fig. 1: -eine Draufsicht auf ein erstes Ausführungsbeispiel einer erfindungsgemässen Membrane;

- Fig. 2: -eine Schnittansicht der Membrane von Fig. 1 entsprechend der Linie II-II;
- Fig. 3: -eine Schnittansicht eines zweiten Ausführungsbeispiels einer erfindungsgemässen Membrane;
- Fig. 4: -eine Draufsicht auf ein drittes Ausführungsbeispiel einer erfindungsgemässen Membrane mit drei Federarmen;
- Fig. 5: -eine Draufsicht auf ein viertes Ausführungsbeispiels einer erfindungsgemässen Membrane mit vier Federarmen; und
- Fig. 6: -eine Draufsicht auf ein fünftes Ausführungsbeispiel einer erfindungsgemässen Membrane mit drei etwa tangential mündenden Federarmen.

Bestimmte Ausdrücke werden in der folgenden Beschreibung aus praktischen Gründen verwendet und sind nicht einschränkend zu verstehen. Die Wörter "unten" und "oben" bezeichnen Richtungen in der Zeichnung, auf die Bezug genommen wird.

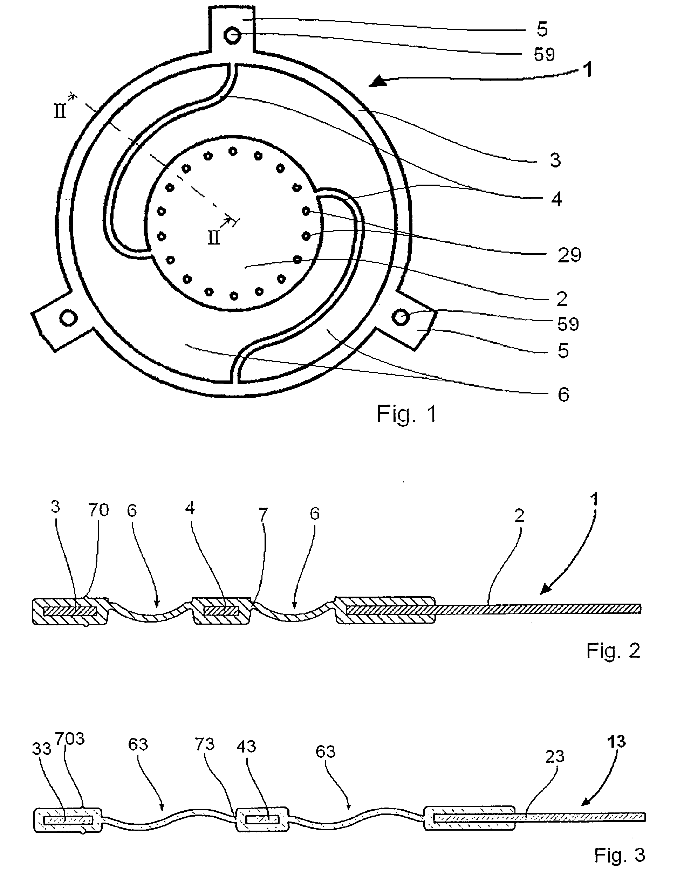

Fig. 1 zeigt eine erfindungsgemässe Membrane 1 mit einem ringförmigen Rand 3, einem kreisscheibenförmigen Teller 2 und einem zwischen Rand 3 und Teller 2 angeordneten Federbereich. Der Federbereich umfasst zwei elastomere Dehnzonen 6 und zwei um 180° versetzt angeordnete Federarme 4, welche jeweils den Teller 2 mit dem Rand 3 verbinden. Die Federarme 4 münden jeweils etwa rechtwinklig ih den Teller 2, erstrecken sich auf ungefähr halber Distanz zwischen Teller 2 und Rand 3 etwa 90° um den Teller 2 herum und münden wiederum etwa rechtwinklig in den Rand 3. Der Teller 2 weist entlang seines Randes eine Mehrzahl von runden Löchern 29 auf. Der Rand 3 der Membrane 1 umfasst drei gleichmässig voneinander beabstandete, vom Rand 3 nach aussen abstehende Laschen 5 mit jeweils einem Loch 59. Der Rand 3, der Teller 2, die Laschen 5 und die Federarme 4 sind typischerweise aus einem metallenen Material hergestellt.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen.

Fig. 2 zeigt einen Schnitt durch die Membrane von Fig. 1 entsprechend der Linie II-II. Darin ist ersichtlich, dass die beiden elastomeren Dehnzonen 6 in den Bereichen, in denen die Federarme 4 etwa parallel zum Teller 2 und zum Rand 3 verlaufen, wellenförmig ausgebildet sind. Die elastomeren Dehnzonen 6 bestehen aus Elastomermaterial 7, beispielsweise Kautschuk oder thermoplastischem Elastomer. Dieses ist auch um den Rand 3, um die Federarme 4 und um den Randbereich des Tellers 2 herum angeordnet, was typischerweise mittels Umspritzen oder Überziehen geschieht. Im Randbereich des Tellers 2 greift es in die Löcher 29 des Tellers 2 und verbindet damit die angrenzenden elastomeren Dehnzonen 6 sicher mit dem Teller 2. Weiter weist das Elastomermaterial 7 oberhalb und unterhalb des Randes 3 jeweils einen nach oben bzw. nach unten abstehenden, ringförmigen Wulst 70 auf.

Bei Verwendung der erfindungsgemässen Membrane 1 in einer Druckmesseinrichtung wird der Rand 3 beispielsweise in einem Gehäuse eingespannt. Dabei dienen die Laschen 5 als Positionierhilfen, um ein einfaches, korrektes Einsetzen der Membrane 1 zu ermöglichen. Weiter können die Laschen 5 dazu verwendet werden, elektrische Signale an eine Messvorrichtung bzw. eine Auswertungsvorrichtung zu übertragen, insbesondere bei einer kapazitiven Messung der Auslenkung. Die Löcher 59 der Laschen können auch als Druckpfade zur Übertragung von Druck auf eine Seite der Membrane 1 verwendet werden. Die ringförmigen Wulste 70 dichten die Verbindung von Membrane 1 und Gehäuse ab.

Wird die Membrane 1 in der Druckmesseinrichtung mit Druck beaufschlagt, beispielsweise indem oberhalb der Membrane 1 ein höherer Druck herrscht als unterhalb der Membrane 1, so wird der Teller 2 nach unten gedrückt und gleichzeitig werden die Federarme 4 entsprechend ausgelenkt. Die resultierende Auslenkung der Federarme 4 bzw. des Tellers 2 kann durch eine geeignete Vorrichtung der Druckmesseinrichtung gemessen werden, beispielsweise induktiv oder optisch und insbesondere kapazitiv. Über diese Auslenkung und die Eigenschaften der Federarme 4 kann die Druckdifferenz bestimmt werden. Damit die Messung der Auslenkung der Federarme 4 eine möglichst gute Bestimmung der Druckdifferenz zulässt, sollte im Federbereich der Membrane 1 die Federrate der elastomeren Dehnzonen 6 wesentlich kleiner sein als die Federrate der Federarme 4, beispielsweise um den Faktor zehn. Dies wird durch die wellenförmige Ausgestaltung der elastomeren Dehnzonen 6 begünstigt.

Fig. 3 zeigt ein zweites Ausführungsbeispiel einer erfindungsgemässen Membrane 13. Bei dieser weisen zwei elastomere Dehnzonen 63 in den Bereichen, in denen Federarme 43 etwa parallel zu einem Teller 23 und zu einem Rand 33 verlaufen, jeweils eine sinusförmige Welle mit einem Wellental und einem Wellenberg auf. Dadurch ist die Federrate der elastomeren Dehnzonen 63 des Elastomermaterials 73 im Federbereich der Membrane 13 weiter reduziert, was die Bestimmung der Druckdifferenz bei sehr kleinen Drücken weiter verbessert. Weiter weist das Elastomermaterial 73 oberhalb und unterhalb des Randes 33 jeweils einen nach oben bzw. nach unten abstehenden, ringförmigen Wulst 703 auf.

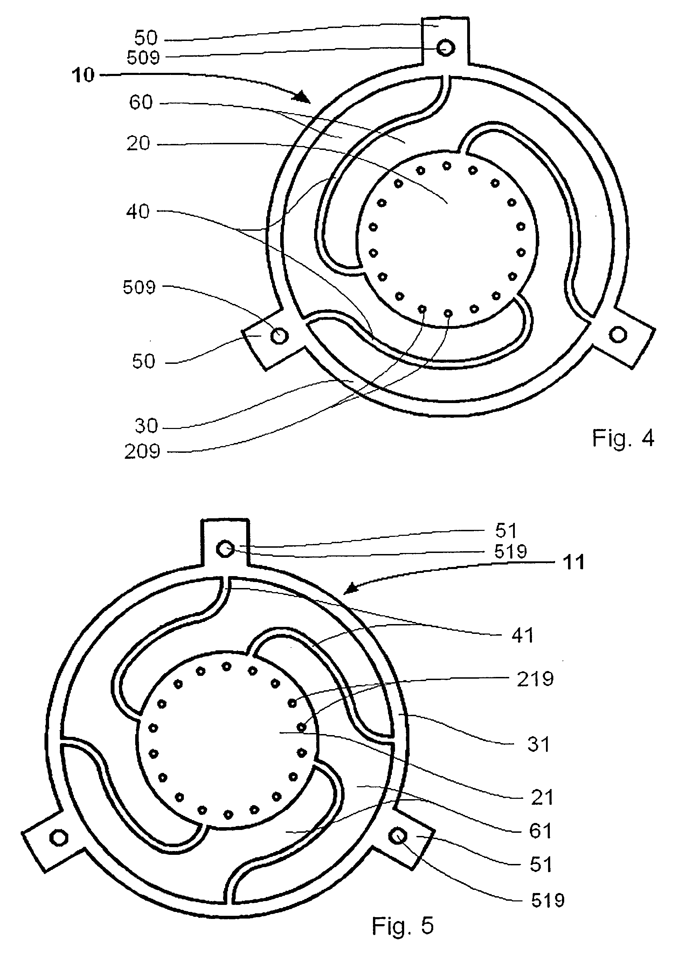

In Fig. 4 ist ein drittes Ausführungsbeispiel einer erfindungsgemässen Membrane 10 mit einem ringförmigen Rand 30, einem kreisscheibenförmigen Teller 20 und einem zwischen Rand 30 und Teller 20 angeordneten Federbereich gezeigt. Der Rand 30 umfasst drei gleichmässig voneinander beabstandete, vom Rand 30 nach aussen abstehende Laschen 50 mit jeweils einem Loch 509. Der Federbereich umfasst drei elastomere Dehnzonen 60 und drei gleichmässig verteilt angeordnete Federarme 40, welche jeweils den Teller 20 mit dem Rand 30 verbinden. Die Federarme 40 münden jeweils etwa rechtwinklig in den Teller 20, erstrecken sich auf ungefähr halber Distanz zwischen Teller 20 und Rand 30 etwa 90° um den Teller 20 und münden auf der Höhe der Laschen 50 wiederum etwa rechtwinklig in den Rand 30. Der Teller 20 weist entlang seines Randes eine Mehrzahl von runden Löchern 209 auf. Entsprechend dem ersten Ausführungsbeispiel ist Elastomermaterial in den elastomeren Dehnzonen 60, um den Rand 30, um die Federarme 40 und um den Randbereich des Tellers 20 herum angeordnet.

Fig. 5 zeigt ein viertes Ausführungsbeispiel einer erfindungsgemässen Membrane 11 mit einem ringförmigen Rand 31, einem kreisscheibenförmigen Teller 21 und einem zwischen Rand 31 und Teller 21 angeordneten Federbereich. Der Rand 31 umfasst drei gleichmässig voneinander beabstandete, vom Rand 31 nach aussen abstehende Laschen 51 mit jeweils einem Loch 519. Der Federbereich umfasst vier elastomere Dehnzonen 61 und vier gleichmässig verteilt angeordnete Federarme 41, welche jeweils den Teller 21 mit dem Rand 31 verbinden. Die Federarme 41 münden jeweils etwa rechtwinklig in den Teller 21, erstrecken sich auf ungefähr halber Distanz zwischen Teller 21 und Rand 31 etwa 70° um den Teller 21 herum und münden wiederum etwa rechtwinklig in den Rand 31. Der Teller 21 weist entlang seines Randes eine Mehrzahl von runden Löchern 219 auf. Entsprechend dem ersten Ausführungsbeispiel ist Elastomermaterial in den elastomeren Dehnzonen 61, um den Rand 31, um die Federarme 41 und um den Randbereich des Tellers 21 herum angeordnet.

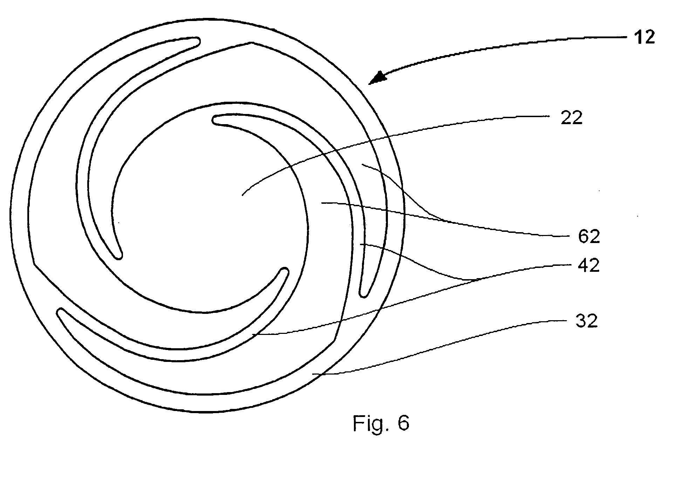

Schliesslich ist in Fig. 6 ein fünftes Ausführungsbeispiel einer erfindungsgemässen Membrane 12 mit einem ringförmigen Rand 32, einem kreisscheibenförmigen Teller 22 und einem zwischen Rand 32 und Teller 22 angeordneten Federbereich dargestellt. Der Federbereich umfasst drei elastomere Dehnzonen 62 und drei gleichmässig verteilt angeordnete Federarme 42, welche jeweils den Teller 22 mit dem Rand 32 verbinden. Die Federarme 42 sind jeweils etwa tangential am Teller 22 angeordnet und nähern sich gleichmässig dem Rand 32, bis sie nach etwa einem 120°-Bogen um den Teller 22 herum wiederum etwa tangential in den Rand 32 münden. Entsprechend dem ersten Ausführungsbeispiel ist Elastomermaterial in den elastomeren Dehnzonen 62, um den Rand 32, um die Federarme 42 und um den Randbereich des Tellers 22 herum angeordnet.

Die in den Fig. 3 bis 6 gezeigten Ausführungsbeispiele der erfindungsgemässen Membrane 13, 10, 11 bzw. 12 stellen verschiedene Alternativen zu der in Fig. 1 gezeigten Membrane 1 dar mit unterschiedlichen Federeigenschaften, wie beispielsweise der Federrate, der Gleichmässigkeit der Federung oder des Temperaturverhaltens der Federung. Je nach Einsatzgebiet kann die vorteilhafteste Variante gewählt werden.

Zu den vorbeschriebenen erfindungsgemässen Membranen sind weitere konstruktive Variationen realisierbar. Hier ausdrücklich erwähnt seien noch:
- Das Elastomermaterial kann anstatt um den Rand, die Federarme und den Randbereich des Tellers herum angeordnet zu sein, auch nur einseitig an allen oder einigen dieser Elemente oder sogar nur zwischen diesen Elementen angeordnet sein.
- Die Verbindung von Elastomermaterial und Rand, Federarme sowie Teller kann durch einen Haftvermittler verstärkt sein.
- Die elastomeren Dehnzonen können anstatt wellenförmig ohne Wellen oder sogar gespannt ausgestaltet sein.
- Der Rand kann grundsätzlich in beliebiger Form ausgestaltet sein, beispielsweise oval oder polygonal. Auch kann er sowohl durchgehend als auch segmentiert sein.
- Die Federarme und der Teller können grundsätzlich unterschiedliche Formen aufweisen. Sie können zur Modifikation der Federrate auch noch zusätzlich teilweise verdickt oder verdünnt sein.
- Die Löcher am Teller oder auch Löcher an den Federarmen oder dem Rand können in beliebiger Form ausgestaltet sein, beispielsweise rund, dreieckig, quadratisch oder als Schlitze.

## Patentansprüche

1. Membrane (1; 10; 11; 12; 13) mit einem elastischen druckdichten Federbereich, in dem ein festerer Teller (2; 20; 21; 22; 23) angeordnet ist, **dadurch gekennzeichnet, dass** der Federbereich aus Elastomermaterial (7; 73) besteht, in das mindestens ein Federarm (4; 40; 41; 42; 43) eingebettet ist.

2. Membrane (1; 10; 11; 12; 13) nach Anspruch 1, **dadurch gekennzeichnet, dass** angrenzend an den Federbereich ein festerer Rand (3; 30; 31; 32; 33) angeordnet ist.

3. Membrane (1; 10; 11; 12; 13) nach Anspruch 2, **dadurch gekennzeichnet, dass** der mindestens eine Federarm (4; 40; 41; 42; 43) den Rand (3; 30; 31; 32; 33) mit dem Teller (2; 20; 21; 22; 23) verbindet.

4. Membrane (1; 10; 11; 12; 13) nach Anspruch 3, **dadurch gekennzeichnet, dass** der mindestens eine Federarm (4; 40; 41; 42; 43), der Rand (3; 30; 31; 32; 33) und der Teller (2; 20; 21; 22; 23) aus einem elektrisch leitenden Material bestehen.

5. Membrane (12; 13) nach einem der Ansprüche 2 bis 4, **dadurch gekennzeichnet, dass** der mindestens eine Federarm (42; 43) etwa tangential in den Rand (32; 33) und den Teller (22; 23) mündet.

6. Membrane (1; 10; 11; 12; 13) nach einem der Ansprüche 2 bis 5, **dadurch gekennzeichnet, dass** der mindestens eine Federarm (4; 40; 41; 42; 43) teilweise etwa parallel zum Rand (3; 30; 31; 32; 33) verläuft.

7. Membrane (1; 10; 11; 12; 13) nach Anspruch 6, **dadurch gekennzeichnet, dass** der mindestens eine Federarm (4; 40; 41; 42; 43) in dem Teil, in welchem er etwa parallel zum Rand (3; 30; 31; 32; 33) verläuft, vom Rand (3; 30; 31; 32; 33) und vom Teller (2; 20; 21; 22; 23) etwa den gleichen Abstand aufweist.

8. Membrane (10; 11; 12; 13) nach einem der Ansprüche 1 bis 7, **dadurch gekennzeichnet, dass** der Federbereich drei bis sieben Federarme (40; 41; 42; 43) aufweist.

9. Membrane (1; 10; 11; 12; 13) nach einem der Ansprüche 1 bis 8, **dadurch gekennzeichnet, dass** das Elastomermaterial (7; 73) mindestens teilweise wellenförmig angeordnet ist.

10. Membrane (1; 10; 11; 12) nach einem der Ansprüche 1 bis 9, **dadurch gekennzeichnet, dass** das Elastomermaterial (7; 73) vorgespannt ist.

11. Membrane (1; 10; 11; 13) nach einem der Ansprüche 1 bis 10, **dadurch gekennzeichnet, dass** der Teller (2; 20; 21; 23) zur besseren Verbindung mit dem Elastomermaterial (7; 73) Löcher (29; 209; 219) aufweist, in die das Elastomermaterial (7; 73) eingreift.

12. Membrane (1; 10; 11; 13) nach einem der Ansprüche 1 bis 11, **dadurch gekennzeichnet, dass** der Rand (3; 30; 31; 33) mit mindestens einer Lasche (5; 50; 51) versehen ist.
